# EUROPÄISCHE PATENTSCHRIFT

(11) **EP 1 964 663 B1**
(45) Veröffentlichungstag und Bekanntmachung des Hinweises auf die Patenterteilung: **22.09.2010**
(21) Anmeldenummer: 08100135.6
(22) Anmeldetag: 07.01.2008
(51) Int. Cl.: B29C 67/24, C08J 3/22, C08J 3/24, C08K 5/353, C08L 67/02, C08L 77/00, C08L 77/02

(54) **Kontinuierliches Verfahren zur Herstellung eines Reaktivpolymers**
Continuous process for the preparation of a reactive polymer
Procédé de production en continu d'un polymère réactif

(30) Priorität: 27.02.2007 DE 102007009921
(43) Veröffentlichungstag der Anmeldung: 03.09.2008
(73) Patentinhaber: Evonik Degussa GmbH, 45128 Essen (DE)
(72) Erfinder: Stegemann, Jochen, 45721 Haltern am See (DE); Szumigala, Jürgen, 45699 Herten (DE); Omeis, Marianne, 46286 Dorsten (DE)

(56) Entgegenhaltungen:
- EP-A- 0 279 578
- EP-A- 0 284 379
- EP-A- 0 541 926
- WO-A-00/15693
- WO-A-89/01962
- WO-A-2004/101666
- VAINIO T ET AL: "FUNCTIONALIZATION OF POLYPROPYLENE WITH OXAZOLINE AND REACTIVE BLENDING OF PP WITH PBT IN A COROTATING TWIN-SCREW EXTRUDER" JOURNAL OF APPLIED POLYMER SCIENCE, JOHN WILEY AND SONS INC. NEW YORK, US, Bd. 64, Nr. 7, 14. Februar 1997 (1997-02-14), Seiten 883-894, XP000722892 ISSN: 0021-8995

## Beschreibung

Die Erfindung betrifft ein kontinuierliches Verfahren zur Herstellung eines Reaktivpolymers, das chemisch ungebundenes Mono- und/oder Bisoxazolin aufweist. Dieses Reaktivpolymer ist wiederum einsetzbar für die Reaktivkompatibilisierung von Polymeren.

Die Reaktion von bifunktionellen Oxazolinen mit Polyestern oder Polyamiden ist in der Literatur hinreichend beschrieben. Die endständigen Carboxylgruppen des jeweiligen Polymers reagieren mit dem Oxazolin unter Ringöffnung. Eine Reaktivkompatibilisierung von Polyamid 6 und Polybutylenterephthalat wird in Polymer Degradation and Stability, Volume 90, 2005, 224 - 233 beschrieben. Ziel dieser Reaktivkompatibilisierung ist die Kombination der hohen Schlagzähigkeit des Polyamids mit der Chemikalien- und Wasserbeständigkeit des Polybutylenterephthalats in einem Polymerblend. Nach einer Reaktivkompatibilisierung von Polyamid und Polybutylenterephthalat unter Zusatz von 0,2 - 0,4 Gew.-% 1,3-Phenylenbisoxazolin in einem gleichsinnig rotierenden Doppelschneckenextruder entstehen Polymerblends, die eine verbesserte Schlagzähigkeit und eine reduzierte Wasseraufnahme - verglichen mit einem Polymerblend, das ohne die Zugabe von 1,3-Phenylenbisoxazolin kompatibilisiert worden ist - aufweisen.

Eine Kettenverlängerung von Polyestern unter Verwendung Oxazolinen beschreibt Journal of Applied Polymer Science, 32, (1986) 5193-5202.

Eine kontinuierliche und exakte Dosierung von Mono- und/oder Bisoxazolin über einen Trichter - wie sie an handelsüblichen Knetern und Extrudern montiert sind - ist äußerst schwierig, da diese Mono- und/oder Bisoxazoline an den Wänden des Trichters und an den Wänden der Zuläufe anhaften. Diese Anhaftung von Mono- oder Bisoxazolin erschwert die kontinuierliche und exakte Dosierung dieser Verbindungen zu Polymeren in handelsüblichen Knetern und Extrudern erheblich.

EP-A-0 541 926 beschreibt Kondensate aus Polyestern und Oxazolinen.

Aufgabe der vorliegenden Erfindung war es daher, ein kontinuierliches Verfahren zur Reaktivkompatibilisierung von Polymeren unter Zusatz von Mono- und/oder Bisoxazolin zur Verfügung zu stellen, das eine exakte Mengendosierung dieser Mono- und/oder Bisoxazolin zu den Polymeren ermöglicht.

Überraschenderweise wurde gefunden, dass Mono- und/oder Bisoxazolin exakt zu einem Polymer zudosiert werden kann, wenn das Mono- und/oder Bisoxazolin zunächst zusammen mit einem Polymer vom Typ 1 zu einem staubfreien und homogenen Reaktivpolymer verarbeitet wird, das vorzugsweise als Granulat erhalten wird. Nach der Bestimmung des Gehaltes an chemisch ungebundenen Mono- und Bisoxazolin des Reaktivpolymers ist nun eine exakte Dosierung des Mono- und/oder Bisoxazolins in Form eines Reaktivpolymers zu zahlreichen Polymeren, wie beispielsweise Polyestern, möglich. Das erfindungsgemäße Verfahren ermöglicht somit eine einfache kontinuierliche Dosierung des Mono- und/oder Bisoxazolins zu einem oder mehreren Polymeren. Dieses erfindungsgemäße Verfahren hat neben der exakten Dosierung des Mono- und/oder Bisoxazolins bei der Reaktivkompatibilisierung den Vorteil, dass bei der Reaktivkompatibilisierung eine Aufladung und eine Staubentwicklung vermieden werden kann. Dies ist insbesondere daher von Vorteil, da es sich bei den Mono- und Bisoxazolinen häufig um Gefahrstoffe handelt.

Gegenstand der Erfindung ist somit ein kontinuierliches Verfahren zur Reaktivkompatibilisierung von Polymeren unter Zusatz von Mono- und/oder Bisoxazolin, das sich dadurch auszeichnet, dass
I. zunächst Mono- und/oder Bisoxazolin zusammen mit einem Polymer vom Typ 1, einem Polyamid, zu einem Reaktivpolymer verarbeitekt wird wobei das Mono- und/oder Bisoxazolin in einem Gewichtsverhaltnis von 1:2 bis 1:6 dem Polyamid Zugesetzt wird und
II. anschließend die Zugabe dieses Reaktivpolymers zu einem oder mehreren Polymeren vom Typ 2 erfolgt. Hierbei weist das Reaktiv polymer ein Polymer von Typ 1, mindestens 5 Gew.-% qn chemisch ungebundenem Mono- und/oder Bisoxazolin und das Reaktionsproduckt aus Mono- und/oder Bisoxazolin und Polymer vom Typ 1 auf.

Weiterer Gegenstand dieser Erfindung ist ein Reaktivpolymer, das sich dadurch auszeichnet, dass dieses Reaktivpolymer
I. ein Polymer vom Typ, einem polyamid und
II. chemisch ungebundenes Mono- und/oder Bisoxazolin und III, deren Reaktionsproduckt aufweist, wobei das Reaktivpolymer mindesten 5 Gew.-% an chemisch ungebundenem Mono- und Bisoxazolin aufweist.

Das erfindungsgemäße kontinuierliche Verfahren zur Reaktivkompatibilisierung von Polymeren unter Zusatz von Mono- und/oder Bisoxazolin,
zeichnet sich dadurch aus, dass
I. zunächst Mono- und/oder Bisoxazolin zusammen mit einem Polymer vom Typ 1 zu einem Reaktivpolymer verarbeitet wird und
II. anschließend die Zugabe dieses Reaktivpolymers zu einem oder mehreren Polymeren vom Typ 2 erfolgt.

Die Herstellung des Reaktivpolymers in dem Verfahrensschritt I des erfindungsgemäßen Verfahrens erfolgt vorzugsweise dadurch, dass ein Polymer vom Typ 1 und ein Mono- und/oder Bisoxazolin vermengt werden. Vorzugsweise erfolgt dies mittels eines Kneters oder Extruders. Dieser Verfahrensschritt I erfolgt vorzugsweise bei einer Temperatur oberhalb des Schmelzpunktes des Polymers und bevorzugt unterhalb von 250°C. Hierbei wird das Mono- und/oder Bisoxazolin in einem Gewichtsverhältnis von 1:2 bis 1:6, bevorzugt in einem Mengenverhältnis von 1:3 bis 1:5, dem Polymer vom Typ 1 zugesetzt.

Der Verfahrensschritt I des erfindungsgemäßen Verfahrens kann sowohl diskontinuierlich als auch kontinuierlich erfolgen.

In dem erfindungsgemäßen Verfahren können als Mono- und/oder Bisoxazoline sowohl Monooxazoline gemäß der Struktur 1 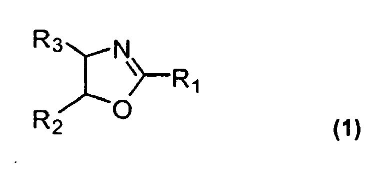
mit R₁ = Alkyl- oder Phenylgruppe,
R₂, R₃ = Wasserstoff, Alkylgruppe,
als auch Bisoxazoline gemäß der Struktur 2 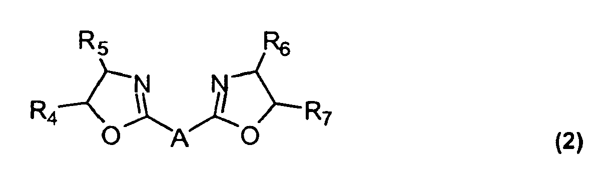
mit R₄, R₅, R₆, R₇ = Wasserstoff, Alkylgruppe,
A = Alkylen, Phenylen,
wobei die Substituenten vom Typ R₁, R₂, R₃, R₄, R₅, R₆ und R₇ gleich oder verschieden sowie substituiert oder unsubstituiert und das Strukturfragment A substituiert oder unsubstituiert sein können, eingesetzt werden. Bevorzugt werden Mono- und/oder Bisoxazolin eingesetzt, wobei die Substituenten vom Typ R₁, R₂, R₃, R₄, R₅, R₆ und R₇ als auch das Strukturfragment A unsubstituiert sind.

Bevorzugt werden in dem Verfahrenschritt I des erfindungsgemäßen Verfahrens Bisoxazoline gemäß der Struktur 2 eingesetzt, besonders bevorzugt werden hierbei Phenylenbisoxazoline, insbesondere ausgewählt aus 1,3-Phenylenbisoxazolin und/oder 1,4-Phenylenbisoxazolin, eingesetzt.

In einer besonderen Ausführungsform des Verfahrenschritts I des erfindungsgemäßen Verfahrens werden Mischungen aus verschiedenen Mono- und Bisoxazolinen eingesetzt.

Als Polymer vom Typ 1 können in dem Verfahrensschritt I Polymere mit einem Schmelzpunkt bevorzugt von kleiner 230 °C eingesetzt werden. So können in dem Verfahrensschritt I des erfindungsgemäßen Verfahrens Polymere vom Typ 1 eingesetzt werden, die freie funktionelle Gruppen, sogenannte Endgruppen, ausgewählt aus Carboxyl-, Säureanhydrid-, phenolischen, aminischen, epoxidhaltigen, isocyanathaltigen Gruppen, aufweisen. Als Polymere vom Typ 1 eignen sich insbesondere Polyamide.

Vorzugsweise werden in dem Verfahrenschritt I des erfindungsgemäßen Verfahrens Polymere mit Carboxylendgruppen als Polymere vom Typ 1 eingesetzt. Polymere mit einem Carboxylendgruppengehalt von 10 bis 50 mmol/kg werden bevorzugt als Polymere vom Typ 1 eingesetzt, besonders bevorzugt werden Polymere mit einem Carboxylendgruppengehalt von 20 bis 40 mmol/kg eingesetzt.

Als Polymerarten mit Carboxylendgruppen werden in dem Verfahrenschritt I des erfindungsgemäßen Verfahrens Polyamide als Polymer vom Typ 1 eingesetzt, insbesondere Polyamide mit einem Carboxylendgruppengehalt von 10 bis 50 mmol/kg, bevorzugt von 20 bis 40 mmol/kg.

Als Polymer vom Typ 1 in dem erfindungsgemäßen Verfahren können auch Polymermischungen eingesetzt werden.

Das gemäß Verfahrensschritt I hergestellte Reaktivpolymer liegt vorzugsweise in Granulatform oder geschuppter Form vor. Auf diese Weise wird die Dosierung des Reaktivpolymers in dem Verfahrensschritt II des erfindungsgemäßen Verfahrens erheblich vereinfacht, insbesondere kommt es in diesem Verfahrensschritt II zu keiner Staubentwicklung und es kann eine präzise Dosierung des "Oxazolins zur Polymermischung" erfolgen. Auf diese Weise wird der Verfahrensschritt II - die Reaktivkompatibilisierung - erheblich vereinfacht, so dass er kontinuierlich durchgeführt werden kann.

Um eine präzise Dosierung in dem Verfahrensschritt II gewährleisten zu können, wird in einem zwischengeschaltenem Verfahrensschritt der Gehalt an chemisch ungebundenen Mono- und Bisoxazolin ermittelt, vorzugsweise erfolgt dies mittels Extraktion des chemisch ungebundenen Mono- und Bisoxazolins mittels eines geeigneten Extraktionsmittels und anschließender gaschromatographischen Analyse. So kann die Bestimmung des Gehaltes an chemisch ungebundenen 1,3-Phenylenbisoxazolin des Reaktivpolymers dadurch erfolgen, indem das 1,3-Phenylenbisoxazolin mittels eines geeigneten Extraktionsmittels, wie beispielsweise Dichlormethan, extrahiert wird, und anschließend mittels Gaschromatographie der Gehalt des 1,3-Phenylenbisoxazolin quantitativ bestimmt wird. Nach der Bestimmung des exakten Gehaltes an chemisch ungebundenen 1,3-Phenylenbisoxazolin des Reaktivpolymers kann nun eine exakte Rezeptur für den Verfahrensschritt II des erfindungsgemäßen Verfahrens - der eigentlichen Reaktivkompatibilisierung - erfolgen.

In dem Verfahrensschritt II des erfindungsgemäßen Verfahrens wird das Reaktivpolymer einem Polymer vom Typ 2 oder einem Polymergemisch von Polymeren vom Typ 2 zugegeben. So können in dem Verfahrensschritt II des erfindungsgemäßen Verfahrens Polymere vom Typ 2 eingesetzt werden, die freie funktionelle Gruppen, sogenannte Endgruppen, ausgewählt aus Carboxyl-, Säureanhydrid-, phenolischen, aminischen, epoxidhaltigen, isocyanathaltigen Gruppe, aufweisen. Das Reaktivpolymer hergestellt gemäß dem Verfahrensschritt I des erfindungsgemäßen Verfahrens dient bevorzugt zur Reaktivkompatibilisierung von Polyamiden und Polyestern. Insbesondere wird für die Reaktivkompatibilisierung von Polyethylenterephthalat ein Reaktivpolymer auf der Basis von Polyamiden eingesetzt.

In einer besonderen Ausführungsform des erfindungsgemäßen Verfahrens können für die Reaktivkompatibilisierung auch säure- oder säureanhydridfunktionalisierte Polyolefine, Acrylnitril-Butadien-Styrol-Copolymerisat (ABS) oder Polyamide mit Maleinsäureanhydrideinheiten eingesetzt werden.

Als Polymer vom Typ 2 können in dem Verfahrensschritt II auch entsprechende Mischungen der erwähnten Polymere vom Typ 2 eingesetzt werden.

Das Reaktivpolymer kann über dem Fachmann bekannte kontinuierlich arbeitende Schneckenmaschinen (Extruder oder Kneter), die mit Einfach- oder Doppelschnecke bestückt sind, hergestellt werden. Weiterhin ist eine Seiteneinspeisung über sog. Sidefeeder (Seitenförderung über Schnecke) für das Mono- und/oder Bisoxazolin vorteilhaft.

Das erfindungsgemäße Reaktivpolymer, kennzeichnet sich dadurch, dass dieses Reaktivpolymer
I. ein Polymer vom Typ 1 und
II. chemisch ungebundenes Mono- und/oder Bisoxazolin
aufweist, wobei das Reaktivpolymer mindesten 5 Gew.-% an chemisch ungebundenem Mono- und Bisoxazolin aufweist.

Das erfindungsgemäße Reaktivpolymer kann entweder Monooxazoline gemäß der Struktur 1 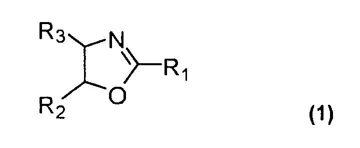
mit R₁ = Alkyl- oder Phenylgruppe,
R₂, R₃ = Wasserstoff, Alkylgruppe,
oder Bisoxazoline gemäß der Struktur 2 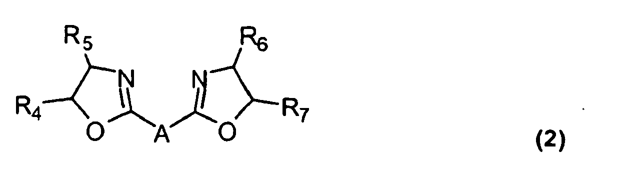
mit R₄, R₅, R₆, R₇ = Wasserstoff, Alkylgruppe,
A = Alkylen, Phenylen,
aufweisen, wobei die Substituenten vom Typ R₁, R₂, R₃, R₄, R₅, R₆ und R₇ gleich oder verschieden sowie substituiert oder unsubstituiert und das Strukturfragment A substituiert oder unsubstituiert sein können. Bevorzugt sind die Substituenten vom Typ R₁, R₂, R₃, R₄, R₅, R₆ und R₇ als auch das Strukturfragment A unsubstituiert.

Bevorzugt weist das erfindungsgemäße Reaktivpolymer Bisoxazoline gemäß der Struktur 2 auf, besonders bevorzugt weist es Phenylenbisoxazoline, insbesondere ausgewählt aus 1,3-Phenylenbisoxazolin und/oder 1,4-Phenylenbisoxazolin, auf.

In einer besonderen Ausführungsform des erfindungsgemäßen Reaktivpolymers weist dieses eine Mischung aus verschiedenen Mono- und Bisoxazolinen auf.

Das erfindungsgemäße Reaktivpolymer weist als Polymer vom Typ 1 vorzugsweise Polymere mit einem Schmelzpunkt bevorzugt von kleiner 230 °C auf. Bevorzugt weist dieses erfindungsgemäße Reaktivpolymer Polymere auf, die freie funktionelle Gruppen, sogenannte Endgruppen, ausgewählt aus Carboxyl-, Säureanhydrid-, phenolischen, aminischen, epoxidhaltigen, isocyanathaltigen Gruppe, aufweisen. Als Polymere vom Typ 1 eignen sich Polyamide.

Als Polymerarten mit Carboxylendgruppen weist das erfindungsgemäße Reaktivpolymer Polyamide als Polymer vom Typ 1 auf. Das erfindungsgemäße Reaktivpolymer kann als Polymer vom Typ 1 auch Polymermischungen aufweisen.

Neben den Polymeren vom Typ 1 weist das erfindungsgemäße Reaktivpolymer auch Polymere auf, die ein Reaktionsprodukt aus dem Mono- und/oder Bisoxazolins und dem Polymer vom Typ 1 sind, hierbei ist das Mono- und/oder Bisoxazolin chemisch an das Polymer vom Typ 1 gebunden.

Daher weist das erfindungsgemäße Reaktivpolymer
I. ein Polymer vom Typ 1,
II. chemisch ungebundenes Mono- und/oder Bisoxazolin und
III. das Reaktionsprodukt aus Mono- und/oder Bisoxazolin und Polymer vom Typ 1
auf.

Der Gehalt an chemisch ungebundenen Mono- und Bisoxazolin beträgt in dem erfindungsgemäßen Reaktivpolymer mindestens 5 Gew.-%, bevorzugt von 8 bis 20 Gew.-%, besonders bevorzugt von 10 bis 15 Gew.-% bezogen auf das Polymer vom Typ 1.

Das erfindungsgemäße Reaktivpolymer liegt vorzugsweise in Granulatform oder geschuppter Form vor.

Das erfindungsgemäße Reaktivpolymer kann gemäß dem Verfahrensschritt 1 des erfindungsgemäßen Verfahrens hergestellt werden.

Die nachfolgenden Beispiele sollen das erfindungsgemäße Reaktivpolymer als auch seine Herstellung näher erläutern, ohne dass die Erfindung auf diese Ausführungsform beschränkt sein soll.

### Beispiel 1

7,67 kg Ultramid B 40 (Polyamid 6) und 1,89 kg 1,3-Phenylenbisoxazolin werden über zwei unabhängige Dosiervorrichtungen in einem Buss-Ko-Kneter bei einer Zylindertemperatur von 240 °C und einer Schneckendrehzahl von 250 U/min dosiert. Auf diese Weise werden 9,20 kg Reaktivpolymer erhalten.

### Charakterisierung des Reaktivpolymers:

Der Wassergehalt dieses Reaktivpolymers wird gemäß DIN EN ISO 15512 - Verfahren B ermittelt und beträgt 0,04 Gew.-%.

Der Carboxylendgruppengehalt wird ermittelt, indem 2 g des Reaktivpolymers in Benzylalkohol gelöst werden und anschließend mit methanolischer KOH (Titerlösung: 0,05 mol/l) bis zu einem Farbumschlag durch den Farbindikator Phenolphthalein titriert wird. Der Carboxylendgruppengehalt des Reaktivpolymers beträgt < 3 mmol/kg.

### Bestimmung des eluierbaren 1,3-Phenylenbisoxazolins:

Je 15 g des Reaktivpolymers werden 18 Stunden in einem Soxhlet-Extraktor in 100 ml Dichlormethan extrahiert. Das Extrakt wird im Stickstoffstrom eingeengt und der Rückstand wird 18 Stunden bei 95°C im Vakuum getrocknet. Die gaschromatographische Gehaltsbestimmung liefert einen Gehalt an 1,3-Phenylenbisoxid bezogen auf das eingesetzte Reaktivpolymer von 11,7 Gew.-%.

1-H-NMR-Untersuchungen zeigen ca. 4 Gew.-% an chemisch gebundenen "Oxazolin".

## Patentansprüche

1. Kontinuierliches Verfahren zur Reaktivkompatibilisierung von Polymeren unter Zusatz von Mono- und/oder Bisoxazolin,
das sich **dadurch** auszeichnet, dass
I. zunächst Mono- und/oder Bisoxazolin zusammen mit einem Polymer vom Typ 1, einem Polyamid, zu einem Reaktivpolymer verarbeitet wird, wobei das Mono- und/oder Bisoxazolin in einem Gewichtsverhältnis von 1:2 bis 1:6 dem Polymer vom Typ 1 zugesetzt wird, und
II. anschließend die Zugabe dieses Reaktivpolymers, das
• ein Polymer vom Typ 1, einem Polyamid,
• mindestens 5 Gew.-% an chemisch ungebundenem Mono- und/oder Bisoxazolin und
• das Reaktionsprodukt aus Mono- und/oder Bisoxazolin und Polymer vom Typ 1
aufweist, zu einem oder mehreren Polymeren vom Typ 2 erfolgt.

2. Verfahren gemäß Anspruch 1,
**dadurch gekennzeichnet,**
**dass** Bisoxazoline gemäß der Struktur 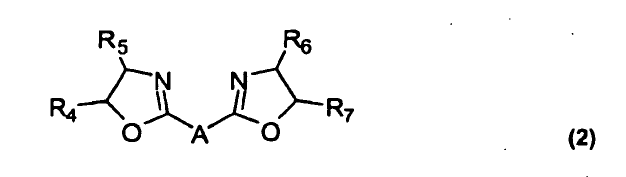
mit R₄, R₅, R₆, R₇ = Wasserstoff, Alkylgruppe
A = Alkylen, Phenylen,
wobei die Substituenten vom Typ R₄, R₅, R₆ und R₇ gleich oder verschieden sowie substituiert oder unsubstituiert und das Strukturfragment A substituiert oder unsubstituiert sind, eingesetzt werden.

3. Verfahren gemäß Anspruch 2,
**dadurch gekennzeichnet,**
**dass** 1,3-Phenylenbisoxazolin und/oder 1,4-Phenylenbisoxazolin eingesetzt wird.

4. Verfahren gemäß zumindest einem der Ansprüche 1 bis 3,
**dadurch gekennzeichnet,**
**dass** als Polymere vom Typ 1 Polymere mit einem Carboxylendgruppengehalt von 10 bis 50 mmol/kg eingesetzt werden.

5. Verfahren gemäß zumindest einem der Ansprüche 1 bis 4,
**dadurch gekennzeichnet,**
**dass** nach dem Verfahrensschritt 1 und vor dem Verfahrensschritt 2 der Gehalt an chemisch ungebundenem Mono- und Bisoxazolin ermittelt wird.

6. Reaktivpolymer,
**dadurch gekennzeichnet,**
**dass** dieses Reaktivpolymer
I. ein Polymer vom Typ 1, einem Polyamid,
II. chemisch ungebundenes Mono- und/oder Bisoxazolin und
III. das Reaktionsprodukt aus Mono- und/oder Bisoxazolin und Polymer vom Typ 1 aufweist, wobei das Reaktivpolymer mindestens 5 Gew.-% an chemisch ungebundenem Mono- und Bisoxazolin aufweist.

7. Reaktivpolymer gemäß Anspruch 6,
**dadurch gekennzeichnet,**
**dass** dieses Reaktivpolymer Bisoxazoline gemäß der Struktur 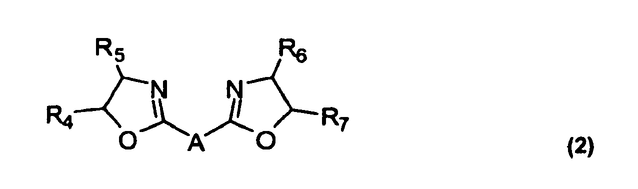
mit R₄, R₅, R₆, R₇ = Wasserstoff, Alkylgruppe
A = Alkylen, Phenylen,
wobei die Substituenten vom Typ R₄, R₅, R₆ und R₇ gleich oder verschieden sowie substituiert oder unsubstituiert und das Strukturfragment A substituiert oder unsubstituiert sind, aufweist.

8. Reaktivpolymer gemäß Anspruch 7,
**dadurch gekennzeichnet,**
**dass** dieses Reaktivpolymer 1,3-Phenylenbisoxazolin und/oder 1,4-Phenylenbisoxazolin aufweist:

9. Reaktivpolymer gemäß zumindest einem der Ansprüche 6 bis 8,
**dadurch gekennzeichnet,**
**dass** der Gehalt an chemisch ungebundenem Mono- und Bisoxazolin von 8 bis 20 Gew.-% bezogen auf das Polymer von Typ 1 beträgt.

## Claims

1. Continuous process for the reactive compatibilization of polymers with addition of mono- and/or bisoxazoline,
which is **characterized in that**
I. firstly mono- and/or bisoxazoline is processed together with a polymer of type 1, a polyamide, to give a reactive polymer, the mono- and/or bisoxazoline being added in a weight ratio of from 1:2 to 1:6 to the polymer of type 1, and
II. then this reactive polymer which has
• a polymer of type 1, a polyamide,
• at least 5% by weight of chemically unbound mono- and/or bisoxazoline and
• the reaction product of mono- and/or bisoxazoline and polymer of type 1,
is added to one or more polymers of type 2.

2. Process according to Claim 1,
**characterized in that**
bisoxazolines according to the structure 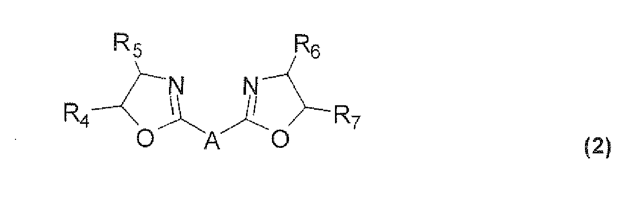
where R₄, R₅, R₆, R₇ = hydrogen, alkyl group
A = alkylene, phenylene,
where the substituents of the type R₄, R₅, R₆ and R₇ are identical or different and substituted or unsubstituted and the structure fragment A is substituted or unsubstituted, are used.

3. Process according to Claim 2,
**characterized in that**
1,3-phenylenebisoxazoline and/or 1,4-phenylenebisoxazoline is used.

4. Process according to at least one of Claims 1 to 3,
**characterized in that** polymers with a carboxyl end group content of from 10 to 50 mmol/kg are used as polymers of type 1.

5. Process according to at least one of Claims 1 to 4,
**characterized in that**
the content of chemically unbound mono- and bisoxazoline is determined after process step 1 and before process step 2.

6. Reactive polymer,
**characterized in that**
this reactive polymer has
I. a polymer of type 1, a polyamide,
II. chemically unbound mono- and/or bisoxazoline and
III. the reaction product of mono- and/or bisoxazoline and polymer of type 1,
the reactive polymer having at least 5% by weight of chemically unbound mono- and bisoxazoline.

7. Reactive polymer according to Claim 6, **characterized in that**
this reactive polymer has bisoxazolines according to the structure 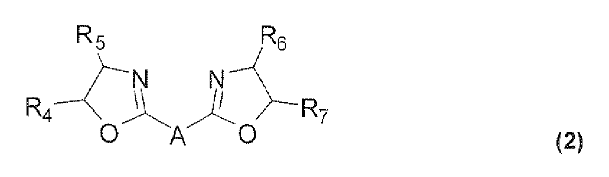
where R₄, R₅, R₆, R₇ = hydrogen, alkyl group
A = alkylene, phenylene,
where the substituents of type R₄, R₅, R₆ and R₇ are identical or different and substituted or unsubstituted and the structure fragment A is substituted or unsubstituted.

8. Reactive polymer according to Claim 7,
**characterized in that**
this reactive polymer has 1,3-phenylenebisoxazoline and/or 1,4-phenylenebisoxazoline.

9. Reactive polymer according to at least one of Claims 6 to 8,
**characterized in that**
the content of chemically unbound mono- and bisoxazoline is from 8 to 20% by weight, based on the polymer of type 1.

## Revendications

1. Procédé continu pour la compatibilisation réactive de polymères avec addition de mono-oxazoline et/ou de bisoxazoline, **caractérisé en ce que**
I. de la mono-oxazoline et/ou de la bisoxazoline ensemble avec un polymère de type 1, un polyamide, est d'abord transformée en un polymère réactif, la mono-oxazoline et/ou la bisoxazoline étant ajoutée dans un rapport pondéral de 1:2 à 1:6 au polymère de type 1, et
II. l'addition de ce polymère réactif, qui présente
- un polymère de type 1, un polyamide,
- au moins 5% en poids de mono-oxazoline et/ou de bisoxazoline chimiquement non liée et
- le produit de réaction de mono-oxazoline et/ou de bisoxazoline et de polymère de type 1
à un ou plusieurs polymères de type 2 est réalisée ensuite.

2. Procédé selon la revendication 1, **caractérisé en ce qu'**on utilise des bisoxazolines selon la structure 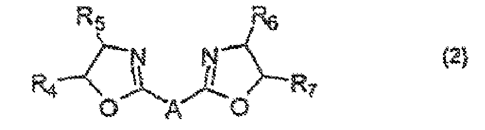 avec
R₄, R₅, R₆, R₇ =hydrogène, groupe alkyle
A = alkylène, phénylène,
où les substituants du type R₄, R₅, R₆ et R₇ sont identiques ou différents ainsi que substitués ou non substitués et le fragment de structure A est substitué ou non substitué.

3. Procédé selon la revendication 2, **caractérisé en ce qu'**on utilise de la 1,3-phénylènebisoxazoline et/ou de la 1,4-phénylènebisoxazoline.

4. Procédé selon au moins l'une quelconque des revendications 1 à 3, **caractérisé en ce qu'**on utilise comme polymères de type 1 des polymères présentant une teneur en groupes terminaux carboxyle de 10 à 50 mmoles/kg.

5. Procédé selon au moins l'une quelconque des revendications 1 à 4, **caractérisé en ce que** la teneur en mono-oxazoline et en bisoxazoline chimiquement non liée est déterminée après l'étape de procédé 1 et avant l'étape de procédé 2.

6. Polymère réactif, **caractérisé en ce que** ce polymère réactif présente
I. un polymère de type 1, un polyamide,
II. de la mono-oxazoline et/ou de la bisoxazoline chimiquement non liée et
III. le produit de réaction de mono-oxazoline et/ou de bisoxazoline et de polymère de type 1
le polymère réactif présentant au moins 5% en poids de mono-oxazoline et de bisoxazoline chimiquement non liée.

7. Polymère réactif selon la revendication 6, **caractérisé en ce que** ce polymère réactif contient des bisoxazolines selon la structure 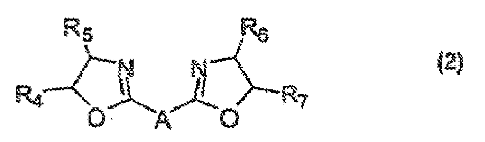 avec
R₄, R₅, R₆, R₇ =hydrogène, groupe alkyle
A = alkylène, phénylène,
où les substituants du type R₄, R₅, R₆ et R₇ sont identiques ou différents ainsi que substitués ou non substitués et le fragment de structure A est substitué ou non substitué.

8. Polymère réactif selon la revendication 7, **caractérisé en ce que** ce polymère réactif présente de la 1, 3-phénylènebisoxazoline et/ou de la 1,4-phénylènebisoxazoline.

9. Polymère réactif selon au moins l'une quelconque des revendications 6 à 8, **caractérisé en ce que** la teneur en mono-oxazoline et en bisoxazoline chimiquement non liée est de 8 à 20% en poids par rapport au polymère du type 1.
